# EUROPÄISCHE PATENTSCHRIFT

(11) **EP 3 009 187 B1**
(45) Veröffentlichungstag und Bekanntmachung des Hinweises auf die Patenterteilung: **21.03.2018**
(21) Anmeldenummer: 15188763.5
(22) Anmeldetag: 07.10.2015
(51) Int. Cl.: B01J 19/08, B01J 8/00, C22B 4/08, B22F 1/00, B22F 9/08, C01G 1/02

(54) **LICHTBOGENREAKTOR UND VERFAHREN ZUR HERSTELLUNG VON NANOPARTIKELN**
ARC REACTOR AND METHOD FOR MAKING NANOPARTICLES
REACTEUR A ARC ELECTRIQUE ET PROCEDE DE FABRICATION DE NANOPARTICULES

(30) Priorität: 14.10.2014 DE 102014220817
(43) Veröffentlichungstag der Anmeldung: 20.04.2016
(73) Patentinhaber: Universität Duisburg-Essen, 45141 Essen (DE)
(72) Erfinder: Kruis, Prof. Dr.-Ing., Frank Einar, 46446 Emmerich (DE); Stein, Matthias, 45479 Mülheim/Ruhr (DE); Geiß, Jeremias, 71384 Weinstadt (DE)
(74) Vertreter: Taruttis, Stefan Georg

(56) Entgegenhaltungen:
- WO-A1-2008/145601
- DE-T2- 69 907 933
- US-A- 5 665 277
- US-A1- 2008 006 954
- MATTHIAS STEIN ET AL: "Adjustment and Online Determination of Primary Particle Size in Transferred Arc Synthesis of Copper Nanoparticles", AEROSOL SCIENCE AND TECHNOLOGY., Bd. 47, Nr. 11, 25. August 2013 (2013-08-25), Seiten 1276-1284, XP055257436, US ISSN: 0278-6826, DOI: 10.1080/02786826.2013.835484
- HENNING FÖRSTER ET AL: "Experimental study of metal nanoparticle synthesis by an arc evaporation/condensation process", JOURNAL OF NANOPARTICLE RESEARCH, Bd. 14, Nr. 7, 12. Juni 2012 (2012-06-12), XP055257456, NL ISSN: 1388-0764, DOI: 10.1007/s11051-012-0926-1
- MATTHIAS STEIN ET AL: "Effect of carrier gas composition on transferred arc metal nanoparticle synthesis", JOURNAL OF NANOPARTICLE RESEARCH, Bd. 15, Nr. 1, 10. Januar 2013 (2013-01-10), XP055257437, NL ISSN: 1388-0764, DOI: 10.1007/s11051-012-1400-9

## Beschreibung

Die vorliegende Erfindung betrifft einen Lichtbogenreaktor und ein damit durchführbares Verfahren zur Herstellung von Nanopartikeln, das bevorzugt kontinuierlich läuft. Das Verfahren und der für das Verfahren eingerichtete Reaktor zeichnen sich bevorzugt dadurch aus, dass Nanopartikel mit geringem Aufwand an Energie und Rohstoffen hergestellt werden können. Die Nanopartikel können Metall, Nichtmetall und Mischungen dieser aufweisen oder daraus bestehen, bevorzugt in der nicht oxidierten Form (Oxidationsstufe 0). Die mit dem Verfahren bzw. mittels des Lichtbogenreaktors hergestellten Nanopartikel haben bevorzugt eine Größenverteilung von 25-250 nm und/oder eine mittlere Größe im Bereich von 80 nm z.B. für Cu⁰ oder 100 nm für Ag⁰, 20 nm für Al⁰, 18 nm für TiN. Das Verfahren zeichnet sich durch einen geringen massenspezifischen Energieverbrauch aus und bevorzugt eine hohe Produktionsrate. Der Reaktor ist für ein kontinuierliches Verfahren eingerichtet und zeichnet sich in bevorzugter Ausführungsform durch einen einfachen Aufbau aus, der einen unterbrechungsfreien kontinuierlichen Betrieb, z.B. über zumindest 8h, bevorzugt zumindest 24h oder zumindest 72h erlaubt.

### Stand der Technik

Stein et al., Aerosol Science and Technology 1276-1284 (2013), beschreibt einen gattungsgemäßen Lichtbogenreaktor zur Herstellung von Nanopartikeln aus Kupfer, bei dem ein Massendurchflussregler das Trägergas regelt, das unterhalb eines Tiegels in den Reaktor strömt und oberhalb des Tiegels durch ein Rohr abgezogen wird, das einstückig mit dem Tiegel ausgebildet ist und eine Öffnung für die Kathode aufweist. Der Tiegel bildet die Anode und wird durch das einstückig mit dem Tiegel ausgebildete Rohr mit Metallgranalien nachgefüllt.

Stein et al., J. Nanopart Res. (2013) 15:1400, beschreibt einen gattungsgemäßen Lichtbogenreaktor zur Herstellung von Nanopartikeln aus Kupfer, in dem ein Graphittiegel als Anode auf einem Titanstab gehalten wird. Ein Trägergas wird entweder von einer Seite horizontal über den Tiegel strömen gelassen und gegenüber abgeführt, oder wird von unterhalb des Tiegels in den Reaktor strömen gelassen und durch eine oberhalb des Tiegels angeordnete Abzugsöffnung abgeführt.

Förster et al., J Nanopart Res (2012) 14:926 beschreibt einen Lichtbogenreaktor, bei dem der Tiegel, der die Anode bildet, in einem Ausschnitt in der unteren Wandung eines Rohrs in dem Reaktorgehäuse ist. Dieses Rohr leitet Trägergas von rechts über den Tiegel, um den darüber entstandenen Metalldampf in eine links vom Tiegel gebildete Kühlzone zu transportieren. Die Kühlzone wird links vom Tiegel durch ein doppelwandiges Rohr erzeugt, das in der inneren Wand 6 Bohrungen zum Auslass von Kühlgas in Richtung auf seine Längsachse aufweist, wobei die Bohrungen in Richtung des Trägergasstroms geneigt sind.

Die US 2008/0006954 A1 bezieht sich auf ein Verfahren zur Erzeugung von Nanopartikeln mit einer Flamme, die ein Plasma erzeugt.

Die WO 2008/145601 A1 betrifft ein Verfahren zum Dosieren und Einmischen eines pulverförmigen Katalysators in einen Polymerisationsreaktor mittels eines in einem Gehäuse drehbaren Zylinders, der gegenüberliegende Ausnehmungen aufweist, mit denen der Katalysator gefördert wird.

Die DE 699 07 933 T2 beschreibt einen Lichtbogenreaktor, in den ein Verdünnungsgas eingeführt wird und mit dem Lichtbogen erzeugter Dampf in einer Abkühlröhre temperaturkontrolliert kondensiert wird. Das Verdünnungsgas wird vorgeheizt, um eine Abkühlung des Dampfs innerhalb der Plasmakammer zu vermeiden.

Die US 5,665,277 A beschreibt einen Reaktor zur Erzeugung von Nanopartikeln, bei dem erzeugter Dampf durch Einblasen eines Gasstrahls, der den Dampf kühlt und diesen durch eine Wandöffnung in eine zweite Kammer fördert.

### Aufgabe der Erfindung

Der Erfindung stellt sich die Aufgabe, einen alternativen Lichtbogenreaktor und ein Verfahren anzugeben, mit dem Nanopartikel hergestellt werden können, insbesondere Nanopartikel geringer Größe und/oder enger Größenverteilung. Bevorzugt ist der Lichtbogenreaktor bzw. das damit durchgeführte Verfahren für ein kontinuierliches Herstellungsverfahren geeignet. Bevorzugt sollen mit dem Reaktor bzw. dem Verfahren Nanopartikel mit geringem spezifischen Verbrauch von Energie und Hilfsstoffen herstellbar sein.

### Beschreibung der Erfindung

Die Erfindung löst die Aufgabe mit den Merkmalen der Ansprüche 1 und 7 d.h. mit einer Anordnung von zumindest zwei Lichtbogenreaktoren und einem damit durchgeführten Verfahren zur Herstellung von Nanopartikeln. Jeder Lichtbogenreaktor weist jeweils einen Tiegel in einem gasdichten Gehäuse auf, das eine Trägergaszuführung und davon beabstandet einen Trägergasaustritt aufweist. Die Trägergaszuführung ist ein Trägergaseintritt und ist auf die Seite des Tiegels gerichtet, die der Tiegelöffnung gegenüberliegt, wobei die Trägergaszuführung unterhalb des Tiegels angeordnet und auf die der Tiegelöffnung gegenüberliegende Seite des Tiegels gerichtet ist. Der Trägergasaustritt ist oberhalb des Tiegels angeordnet und tritt oberhalb des Tiegels aus dem Gehäuse. Der Trägergasaustritt ist gegenüber der Trägergaszuführung im Gehäuse angeordnet. Der Reaktor zeichnet sich dadurch aus, dass der Trägergasaustritt von einer in einem Abstand oberhalb des Tiegels angeordneten Haube, die vom Tiegel getrennt ist, und einem Abgasrohr gebildet wird, das die Haube mit dem Trägergasaustritt des Gehäuses verbindet. Bevorzugt trägt das Abgasrohr die Haube mit geringem Kontakt, z.B. mittels zumindest zweier radialer Vorsprünge oder eines um das Abgasrohr umlaufenden Vorsprungs, die an einem ersten Ende des Abgasrohrs angebracht sind und auf denen die Haube mit einer dem Tiegel bzw. ihrem endständigen Querschnitt abgewandten kleinen Öffnung aufliegt, um eine Wärmeleitung von der Haube zum Abgasrohr zu erschweren. Weiter bevorzugt ist das Abgasrohr an seinem der Haube gegenüberliegenden zweiten Ende mit Abstand an dem Gehäuse, bevorzugter an einem an das Gehäuse angrenzenden Austrittsrohr gehaltert. Das Austrittsrohr ist gasdicht mit dem Gehäuse verbunden. Die Halterung, die das Abgasrohr am Gehäuse oder am Austrittsrohr haltert, kann z.B. ein flaches Element sein, z.B. ein Metallblech oder eine Keramikscheibe, das in gegenüberliegende Ausnehmungen in der Außenwand des Abgasrohrs eingreift und mit Abstand zum Abgasrohr auf einem Vorsprung aufliegt, der in das Gehäuse bzw. in das Austrittsrohr ragt. Ein solcher Vorsprung kann z.B. durch einen Ring gebildet sein, der gasdicht in einer Flanschverbindung des Austrittsrohrs angeordnet ist. Der geringe Materialquerschnitt und die geringe Kontaktfläche der Halterung des Abgasrohrs zum Gehäuse bzw. Austrittsrohr verhindert eine effektive Wärmeleitung zum Austrittsrohr und erlaubt bevorzugt ein Austrittsrohr ohne besondere Kühlung, z.B. ein einwandiges Austrittsrohr mit Kühlung nur durch Raumluft. Haube und Abgasrohr bestehen bevorzugt aus Graphit.

Die Haube weist einen endständigen Querschnitt auf, der dem Tiegel zugewandt ist und vorzugsweise zumindest die Öffnung des Tiegels überspannt, wobei der endständige Querschnitt der Haube vorzugsweise einen Querschnitt mit einem Durchmesser hat, der zumindest 1,5-fach, bevorzugter zumindest 2-fach oder 2,5-fach größer als der Durchmesser der Tiegelöffnung ist. Der endständige Querschnitt der Haube und die Tiegelöffnung sind bevorzugt kreisförmig. Generell bevorzugt sind Tiegel, Tiegelöffnung, Haube und/oder Abgasrohr um eine gemeinsame Achse rotationssymmetrisch ausgebildet.

Der Tiegel besteht bevorzugt aus Graphit und ist unterhalb seiner Tiegelöffnung verjüngt und an einer Kathode angebracht, bevorzugt von einer Kathode gehaltert, z.B. mittels einer Ausnehmung auf eine senkrechte Kathode gesteckt. Die Verjüngung des Tiegels unterhalb seiner Öffnung verringert den Wärmefluß von der Tiegelöffnung zur Kathode. In einem Abstand zum Tiegel, insbesondere in einem Abstand oberhalb der Tiegelöffnung, ist eine Anode angeordnet. Bevorzugt endet die Anode in dem Zwischenraum, der durch den Abstand zwischen Tiegel und Haube gebildet wird. Die Anode kann z.B. parallel zur Ebene der Tiegelöffnung angeordnet sein, z.B. waagerecht.

Das Gehäuse weist einen Abstand zum Tiegel und zur Haube auf, um eine übermäßige Erwärmung des Gehäuses zu vermeiden. Bevorzugt ist das Gehäuse gekühlt, z.B. mittels eines Doppelmantels, der von einem Kühlmedium durchströmbar ist und in dem beim Verfahren ein Kühlmedium strömen gelassen wird.

Die Haube erlaubt das Abführen des Abgases mit den darin enthaltenen Nanopartikeln und reduziert Verluste, die z.B. durch Ablagern von Nanopartikeln am Gehäuse entstehen, wenn z.B. kein Abgasrohr das Abgas zum Trägergasaustritt führt. Die Haube reduziert auch Verluste, die innerhalb eines Abgasrohrs durch Ablagern von Nanopartikeln entstehen, wenn z.B. ein Abgasrohr mit einem Durchmesser gleich der Tiegelöffnung in geringem Abstand oberhalb der Tiegelöffnung mündet.

Die Kathode und die Anode sind bevorzugt aus Wolfram. Zur Erzeugung eines Lichtbogens zwischen dem Tiegel bzw. in dem Tiegel enthaltenen Rohstoffs und der davon beabstandeten Anode sind die Kathode und die Anode mit einer Stromquelle verbunden.

Der Lichtbogenreaktor zeichnet sich dadurch aus, dass sein Gehäuse zumindest einen Einlass für Kühlgas aufweist, der auf den Zwischenraum gerichtet ist, der durch den Abstand zwischen Tiegel und Haube gebildet wird. Der zumindest eine Einlass für Kühlgas ist aus zwei oder mehr Einlässen für Kühlgas gebildet, die symmetrisch um eine gemeinsame Symmetrieachse von Tiegel und Haube angeordnet sind und optional auf die gemeinsame Symmetrieachse gerichtet sind. Bevorzugt weist ein Einlass für Kühlgas eine Zuleitung für Kühlgas auf, die entlang der Kathode verläuft. Beim Verfahren werden Nanopartikel aus der Rohstoffschmelze mittels des Lichtbogenplasmas gebildet, das zwischen dem Tiegel bzw. der darin enthaltenen Rohstoffschmelze und der Anode erzeugt wird. Es wird gegenwärtig angenommen, dass ein Einlass für Kühlgas die Bildung von Nanopartikeln im Plasma durch schnellere Abkühlung beeinflusst.

Es hat sich im Verfahren zur Herstellung mit der Vorrichtung gezeigt, dass das Zuleiten von Kühlgas in den Zwischenraum, der durch den Abstand von Tiegelöffnung und Haube gebildet wird, die Größe der hergestellten Nanopartikel einstellt. Generell hat sich gezeigt, dass ein höherer Kühlgasstrom zu kleineren Partikelgrößen führt.

Der Trägergasstrom, der durch die Trägergaszuführung um den Tiegel strömt und nach Durchtritt durch den Zwischenraum, der durch den Abstand von Tiegelöffnung und Haube gebildet wird, in die Haube und durch das Abgasrohr zum Trägergasaustritt strömt, transportiert die zwischen Tiegel und Haube bzw. Kathode aus der Rohstoffschmelze entstehenden Nanopartikel. Nach Durchströmen des Trägergasaustritts können die Nanopartikel aus dem Abgas abgetrennt werden, z.B. mittels eines Filters, z.B. eines Keramikfilters. Die Trägergaszuführung kann einen Verdichter aufweisen, um den Trägergasstrom in das Reaktorgehäuse zu fördern. Alternativ oder zusätzlich kann an den Trägergasaustritt eine Unterdruckquelle, z.B. an die Saugseite eines Verdichters angeschlossen sein, um das Abgas aus dem Trägergasaustritt zu saugen. Bevorzugt weist die Vorrichtung genau einen Verdichter auf, der mit der Trägergaszuführung und dem Trägergasaustritt verbunden ist.

Der Querschnitt des Abgasrohrs ist maximal gleich dem endständigen Querschnitt der Haube, bevorzugt weist das Abgasrohr einen Innendurchmesser des maximal 0,5-fachen, bevorzugter des maximal 0,3-fachen oder maximal 0,2-fachen des endständigen Querschnitts der Haube auf. Ein gegenüber dem endständigen Querschnitt der Haube geringerer Querschnitt des Abgasrohrs erlaubt eine Strömungsgeschwindigkeit des Abgases innerhalb des Abgasrohrs, die für den Transport der Nanopartikel ausreicht, wobei geringe Volumenströme des Trägergases ausreichen. Daher erlaubt die Haube, die mittels des Abgasrohrs mit dem Trägergasaustritt verbunden ist, geringe Verluste durch Anlagern von Nanopartikeln und einen effektiven Transport der Nanopartikel aus dem Gehäuse, bevorzugt bei geringem Volumenstrom des Trägergases.

Das Verfahren erlaubt bevorzugt die Herstellung von Nanopartikeln im Abgasstrom, der aus dem Trägergasaustritt des Reaktors tritt, mittels eines Lichtbogens mit geringem spezifischen Energieaufwand, z.B. geringer als bei einem Verfahren mittels einer Vorrichtung, die kein Abgasrohr aufweist oder ein Abgasrohr, das keine Haube aufweist.

Das Verfahren erlaubt Produktionsraten von 5 g/h für Kupfernanopartikel (Cu⁰) der mittleren Größe von 80 nm bei einem spezifischen Energieverbrauch von ca. 100 kWh/kg. Es hat sich gezeigt, dass ohne Haube größere Partikel erzeugt werden, was auf geringere Trägergasgeschwindigkeiten zurückgeführt wird, die ohne Haube erzeugt werden. Gleichzeitig erlauben das Abgasrohr und die Haube eine höhere Produktionsrate und somit geringeren Energieverbrauch als eine Vorrichtung ohne Haube, da die Haube Partikelverluste in dem Reaktorgehäuse deutlich reduziert.

Mit der Vorrichtung, die einen Tiegel in einem Gehäuse aufweist, können im Verfahren die folgenden Ergebnisse erreicht werden: Für reines Zink als Rohstoff werden 13 g/h bei 200 nm mittlerer Partikelgröße mit einer Effizienz von 20 kWh/kg erreicht. Nanopartikel aus Titannitrid (TiN als Rohstoff) können mit einer mittleren Größe von 18 nm zu 300 mg/h bei einer Effizienz von 2,6 kWh/g produziert werden, Silbernanopartikel (Ag⁰ als Rohstoff) mit einer mittleren Größe von 100 nm bei einer Produktionsrate von 1g/h und einer Energieeffizienz von 900 kWh/kg. Dabei wird für die Energieeffizienz allein die zur Erzeugung des Lichtbogens eingesetzte elektrische Energie berechnet.

Erfindungsgemäß ist in der Zuleitung von Trägergas und/oder Kühlgas eine Kühleinrichtung angeordnet. Trägergasstrom und Kühlgasstrom können dieselbe Temperatur aufweisen. Trägergas und Kühlgas sind dasselbe Gas. Dabei wird das Abgas nach Abtrennen von Nanopartikeln als Trägergas und Kühlgas in den Reaktor rückgeführt, insbesondere nach Kühlen des Abgases, in einer gemeinsamen Kühleinrichtung und Aufteilen des Abgases in Trägergas und Kühlgas. Die Kühleinrichtung bzw. die Leitungen sind eingerichtet, um bei Rückführen des Abgases als Trägergas und Kühlgas das Abgas nach Abtrennung der Nanopartikel auf eine Temperatur zu bringen, die eine Wärmeabfuhr aus dem zwischen Tiegel bzw. Rohstoffschmelze und Kathode erzeugten Plasma erlaubt, das eine Temperatur von ca. 8.000 bis 10.000K aufweisen kann.
Bevorzugt ist das Gehäuse des Reaktors gasdicht mit einem am Trägergasaustritt angeschlossenen Austrittsrohr, einem an der Trägergaszuführung angeschlossenen Zuleitung für Trägergas, einer am Einlass für Kühlgas angeschlossenen Kühlgasleitung, einem Vorratsbehälter für den Rohstoff und einem zwischen dem Vorratsbehälter und dem Reaktor angeordneten Fördereinrichtung mit einer Zuführleitung für Rohstoff, optional einer zwischen Austrittsrohr und Zuleitung für Trägergas angeordneten Trenneinrichtung zum Abscheiden von Nanopartikeln aus dem Abgas und optional einer zwischen der Trenneinrichtung und der Zuleitung für Trägergas angeordneten Kühleinrichtung verbunden, so dass der Reaktor mit den vorgenannten Elementen gasdicht ist. In dieser Ausführungsform erlaubt der Reaktor auf einfache Weise eine konstante Zusammensetzung des Trägergases und Kühlgases, z.B. eine konstante nicht oxidierende Gaszusammensetzung für Trägergas und Kühlgas und z.B. vor dem Betrieb ein einfaches Evakuieren oder Gasspülen und anschließendes Füllen mit einem Trägergas.

Der Rohstoff ist bevorzugt in Form von Granalien, z.B. für Metalle, insbesondere Cu⁰, oder Metalllegierungen mit einer Korngröße von ca. 0,5 bis 2 mm.

Der Vorratsbehälter kann gasdicht verschließbar sein, so dass er vor dem Evakuieren oder Gasspülen und vollständigen Füllen des Reaktors mit Trägergas mit Rohstoff, insbesondere Rohstoffgranalien, gefüllt wird und nach dem gasdichten Verschließen gemeinsam mit dem Reaktor evakuiert oder gasgespült werden kann. Die Größe des Vorratsbehälters ist lediglich an den geplanten Durchsatz des Verfahrens anzupassen.

Für ein einfaches Füllen des Tiegels während des Verfahrens weist der Reaktor bevorzugt eine Zuführleitung für Rohstoff auf, die bevorzugt in das zweite Ende des Abgasrohrs mündet, das gegenüber der Haube liegt. Diese Ausführung erlaubt die Führung von Rohstoff, insbesondere Rohstoffgranalien, durch die Zuführleitung und das Abgasrohr in den Tiegel. Es hat sich gezeigt, dass das Zuführen von Rohstoffgranalien während des Verfahrens durch das Abgasrohr die Prozeßstabilität nicht beeinträchtigt und ein kontinuierliches Verfahren erlaubt, in der bevorzugten Ausführungsform bis zur Umsetzung des Rohstoffs, der im Vorratsbehälter enthalten war.

Eine bevorzugte Fördereinrichtung für Granalien ist gesteuert und einschließlich ihres elektrischen Antriebsmotors gasdicht von einem Gehäuse umschlossen, das gasdicht mit dem Reaktor verbunden ist, so dass nur elektrische Leitungen für den Antriebsmotor durch das Gehäuse geführt sind. Diese Ausführungsform vermeidet die gasdichte Durchführung beweglicher Elemente, z.B. einer Antriebswelle, durch die Gehäusewandung.

Eine bevorzugte Fördereinrichtung weist einen Rotor auf, der unterhalb eines Durchlasses angeordnet ist, der mit dem Vorratsbehälter für Rohstoff verbunden ist. Der Rotor weist eine umlaufende Umfangsfläche auf, die um eine etwa horizontal angeordnete Achse drehbar ist und von dem Antriebsmotor angetrieben ist. Es hat sich z.B. an Metallgranalien gezeigt, dass die Haftungsreibung mit dem Rotor ausreicht, um Granalien über den oberen Scheitel zu bewegen. Daher ist der Rotor innerhalb eines Gehäuseabschnitts drehbar angeordnet, der auf einer ersten Seite des oberen Scheitels des Rotors in geringerem Abstand von Rotor entfernt angeordnet ist, als der Durchmesser der Granalien beträgt. Der Rotor ist mit einer Drehrichtung von der ersten Seite über seinen oberen Scheitel zu der gegenüberliegenden zweiten Seite angetrieben. Auf der zweiten Seite vom oberen Scheitel des Rotors ist der Gehäuseabschnitt in größerem Abstand von der Umfangsfläche des Rotors angeordnet, als der Durchmesser der Granalien beträgt, so dass die Granalien durch den Rotor zur zweiten Seite vom Scheitel bewegt werden und anschließend durch die Schwerkraft entlang des Gehäuseabschnitts der zweiten Seite bewegt werden. Entsprechend ist der Rotor, insbesondere auf der zweiten Seite vom oberen Scheitel, in einem Abstand von dem Gehäuseabschnitt angeordnet, der insbesondere eingerichtet ist, Rohstoffgranalien hindurchtreten zu lassen. Diese Fördereinrichtung hat den Vorteil, ohne Blockierung die Granalien gesteuert zu fördern.

Erfindungsgemäß sind zumindest zwei Lichtbogenreaktoren in einer Anordnung enthalten, die ein gemeinsames Reaktorgehäuse aufweist, das in aneinander angrenzenden Abschnitten die Elemente eines Lichtbogenreaktors enthält, so dass jeweils ein Reaktorgehäuse einen Abschnitt des gemeinsamen Reaktorgehäuses der Anordnung bildet. Diese Anordnung von Reaktoren in einem gemeinsamen Reaktorgehäuse mit jeweils den Elementen für jedes Paar aus Anode und Kathode hat den Vorteil einer hohen Prozeßstabilität, da bei Ausfall oder Störung eines Elements nur der daran angeschlossene Reaktor gestört wird und die anderen Reaktoren unbeeinflusst bleiben. Die Elemente für jedes Paar aus Anode und Kathode sind der mit der Anode verbundene Tiegel, die Trägergaszuführung, der zumindest eine auf den Zwischenraum zwischen Tiegel und Haube gerichtete Einlass für Kühlgas, die in einem Abstand vom Tiegel angeordnete Haube, die mittels des Abgasrohrs gehalten ist und mit dem Trägergasaustritt verbunden ist, das am Trägergasaustritt angeschlossene Austrittsrohr, die an der Trägergaszuführung angeschlossene Zuleitung für Trägergas, die am Einlass für Kühlgas angeschlossene Kühlgasleitung, und insbesondere der Vorratsbehälter für den Rohstoff und die zwischen dem Vorratsbehälter und dem Reaktor angeordnete Fördereinrichtung mit einer Zuführleitung für Rohstoff und die Stromquelle. Die Anordnung weist eine gemeinsame Trenneinrichtung zum Abscheiden von Nanopartikeln aus dem Abgas auf, die zwischen den Austrittsrohren und den Zuleitungen für Trägergas angeordnet ist und eine gemeinsame Kühleinrichtung für Trägergas, die zwischen der Trenneinrichtung und den Zuleitungen für Trägergas angeordnet ist. Als Stromquelle für einen Reaktor bzw. für jedes Paar aus einer Anode und Kathode eignet sich z.B. jeweils ein Schweißtransformator, wie er für das Wolfram-Inertgas-Schweißen erhältlich ist.

Für die Anordnung von zumindest zwei Lichtbogenreaktoren ist an jedem Trägergasaustritt jeweils ein vertikales Austrittsrohr, bevorzugt mit rundem Innenquerschnitt, angebracht Jeweils zwei vertikale Austrittsrohre sind mit einem oberhalb des Reaktors bzw. oberhalb der Austrittsrohre angeordneten horizontalen primären Verbindungsrohr verbunden, das bevorzugt einen rechteckigen, z.B. quadratischen Innenquerschnitt hat, und an dem ein oberhalb bzw. gegenüber der Seite, auf der die Austrittsrohre angeschlossen sind, ein sekundäres Austrittsrohr angeschlossen ist, das bevorzugt zumindest abschnittsweise vertikal verläuft. Bei vier oder mehr Lichtbogenreaktoren in einer Anordnung ist bevorzugt, dass zwischen jeweils zwei der primären Verbindungsrohre und dem sekundären Austrittsrohr ein horizontales sekundäres Verbindungsrohr angeordnet ist, dessen Auslass auf der Seite gegenüber der Verbindung mit primären Verbindungsrohren und in gleichem Abstand zu den Verbindungsrohren angeordnet ist. Für die Anordnung ist bevorzugt, jeweils zwei vertikale Austrittsrohre symmetrisch an einem primären, horizontalen Verbindungsrohr angeschlossen sind, das einen Auslass symmetrisch zu den Anschlüssen der Austrittsrohre aufweist, wobei wiederum die Auslässe von jeweils zwei primären Verbindungsrohren symmetrisch an einem oberhalb angeordneten horizontalen sekundären Verbindungsrohr angeschlossen sind, dessen Auslass symmetrisch zu den Anschlüssen der Auslässen der primären Verbindungsrohre angeordnet ist. Es hat sich gezeigt, dass der symmetrische Anschluss von jeweils zwei Austrittsrohren der Reaktoren an ein Verbindungsrohr und der symmetrische Anschluss von jeweils zwei Verbindungsrohren an ein weiteres horizontales Verbindungsrohr einen gleichmäßigen und gleichen Abgasstrom und/oder Trägergasstrom durch die Reaktoren einer Anordnung fördert. Die Rohre, mit denen jeweils ein Träger-gasaustritt mit einem gemeinsamen Abgasrohr verbunden sind, das zu einer Trenneinrichtung führt, weisen jeweils denselben Strömungswiderstand auf. Die vertikale Anordnung der Austrittsrohre führt in Verbindung mit der horizontalen Anordnung der Verbindungsrohre bevorzugt zu einer größeren Homogenität der an der Trenneinrichtung vom Abgas bzw. Trägergas abgetrennten Nanopartikel, insbesondere bei rechteckigem Innenquerschnitt der Verbindungsrohre. Dazu wird gegenwärtig angenommen, dass größere und/oder agglomerierte Nanopartikel beim Durchströmen der vertikalen Austrittsrohre und horizontalen Verbindungsrohre aus dem Gasstrom abgeschieden werden.

Für die Anordnung von zumindest zwei Lichtbogenreaktoren ist jede Zuleitung für Trägergas mit einer gemeinsamen Trägergasleitung verbunden ist, wobei jede Zuleitung denselben Strömungswiderstand hat, z.B. durch jeweils dieselbe Länge und denselben Innenquerschnitt der Zuleitungen von einem gemeinsamen Verteiler zwischen einer gemeinsamen Trägergasleitung und den Zuleitungen für Trägergas.

Für die Anordnung von zumindest zwei Lichtbogenreaktoren ist jeder Einlass für Kühlgas mittels einer Zuleitung mit einer gemeinsamen Kühlgasleitung verbunden, wobei jede Zuleitung denselben Strömungswiderstand hat. Die gemeinsame Kühlgasleitung kann z.B. von der gemeinsamen Trägergasleitung abzweigen, so dass Trägergas und Kühlgas vollständig aus rückgeführtem und bevorzugt gekühltem Abgas bestehen. Die Anordnung von zumindest zwei Lichtbogenreaktoren kann daher einen Kreislauf für Abgas zum Trägergas und Kühlgas aufweisen.

In dem gemeinsamen Abgasrohr, bevorzugt in der gemeinsamen Trägergasleitung ist bevorzugt ein Verdichter angeordnet, um das von Nanopartikeln abgetrennte Abgas als Trägergas, bevorzugt das Trägergas und das Kühlgas, zu den Trägergaszuführungen bzw. Kühlgaszuleitungen zu fördern.

Die Zuleitungen für Kühlgas und/oder die Zuleitungen für Trägergas weisen keinen Durchflussmengenregler auf.

Als besonderer Vorteil hat sich gezeigt, dass die Anordnung bevorzugt weder an der Abgasleitung zwischen den Reaktoren einer Anordnung und einer Trenneinrichtung, noch zwischen der Trenneinrichtung oder Kühleinrichtung und Trägergaszuführungen einen Durchflussmengenregler aufweist.

Der Reaktor und die Anordnung der Reaktoren haben den Vorteil eines einfachen Aufbaus, der überdies ein kontinuierliches stabiles Verfahren zur Herstellung von Nanopartikeln mit guter Energieeffizienz erlaubt.

Für metallisches Kupfer als Rohstoff sind Trägergas und Kühlgas bevorzugt Stickstoff, für Silicium als Rohstoff sind Trägergas und Kühlgas bevorzugt Argon, für Aluminium als Rohstoff sind Trägergas und Kühlgas bevorzugt eine Mischung aus Argon und Wasserstoff. Für Rohstoffe, die im Lichtbogen in einer Stickstoffatmosphäre keine Nitride bilden, ist generell Stickstoff als Trägergas und als Kühlgas bevorzugt.

Die zu dieser Erfindung führende Arbeit hat finanzielle Unterstützung durch das siebte Rahmenprogramm der Europäischen Union (FP7/2007-2013) mit der Zuschussfassung Nr. 6 vom 24.1.2011 unter der Fördernummer 280765 (BUONAPART-E) erhalten.

Die Erfindung wird nun genauer an Hand von Beispielen und mit Bezug auf Figuren beschrieben, die schematisch in
- Figur 1 einen Lichtbogenreaktor,
- Figur 2 ein Abgasrohr im Längsschnitt,
- Figur 3 das Abgasrohr von Figur 2 in Aufsicht,
- Figur 4 ein flaches Element einer Halterung für ein Abgasrohr,
- Figur 5 einen Ring einer Halterung für ein Abgasrohr,
- Figur 6 eine Haube im Längsschnitt,
- Figur 7 ein gemeinsames Gehäuse einer Anordnung von Reaktoren in Aufsicht,
- Figur 8 einen Längsschnitt durch Austrittsrohre und Verbindungsrohre für ein gemeinsames Gehäuse einer Anordnung von Reaktoren,
- Figur 9 einen Längsschnitt durch einen Verteiler für Trägergas,
- Figur 10 eine Aufsicht auf den Verteiler von Figur 9,
- Figur 11 einen Längsschnitt durch eine Fördereinrichtung mit angeschlossener Zuführleitung für Rohstoff,
- Figur 12 einen um 90° gegenüber Figur 11 drehten Ausschnitt von Figur 11,
- Figur 13 eine schematische Übersicht über eine Anordnung von acht Lichtbogenreaktoren in einer Anlage,
- Figur 14 ein Resultat der XRD Messung zur Bestimmung der Reinheit der Partikel und
- Figur 15 eine rasterelektronenmikroskopische (REM) Aufnahme zur Darstellung der gebildeten Kupferpartikel.

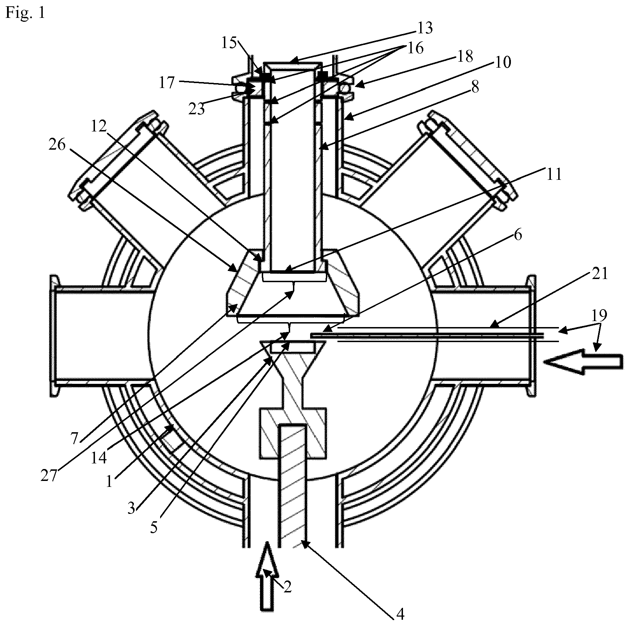

Die Figur 1 zeigt einen Lichtbogenreaktor im Schnitt durch das Gehäuse 1 mit einer Trägergaszuführung 2, durch die ein Trägergasstrom 2 in das Gehäuse 1 eintritt. Der Tiegel 3 ist aus Graphit und wird durch eine Anode 4 gehalten, die in eine Bohrung des Tiegels 3 eingreift. Der Tiegel 3 weist unterhalb seiner Tiegelöffnung 5 eine Verjüngung auf, um die Wärmeleitung von der Tiegelöffnung, 5 zur Anode 4 zu verringern. In einem Abstand oberhalb der Tiegelöffnung, 5 ist eine Kathode 6 aus Wolfram angeordnet. In einem Abstand oberhalb des Tiegels 3 ist eine Haube 7 angeordnet, die vom Abgasrohr 8 gehalten wird. Die Haube 7 ist mittels des Abgasrohrs 8 mit dem Trägergasaustritt 9 verbunden, der oberhalb der Tiegelöffnung, 5 und gegenüber der Trägergaszuführung 2 angeordnet ist und durch den mit Nanopartikeln beladenes Trägergas und Kühlgas als Abgas aus dem Gehäuse 1 austreten.

Das Abgasrohr 8, die Haube 7, der Tiegel 3 und die Anode 4, bevorzugt auch die Trägergaszuführung 2 und der gegenüberliegende Trägergasaustritt 9, sind auf einer gemeinsamen Achse angeordnet, die vertikal steht und sind entsprechend der bevorzugten Ausführungsform jeweils zu dieser Achse symmetrisch ausgebildet.

Das Abgasrohr 8 trägt die Haube 7 durch einen an seinem ersten Ende 11 angeordneten endständigen umlaufenden Vorsprung 12 gehalten, auf dem die Haube 7 mit ihrer kleinen Öffnung aufliegt. Die Haube 7 weist gegenüber ihrer kleinen Öffnung einen endständigen runden Querschnitt 14 auf, der etwa um den Faktor 2,4 größer ist als die Tiegelöffnung, 5. Das Abgasrohr 8 ist an seinem dem ersten Ende 11 gegenüberliegenden zweiten Ende 13 mit Abstand vom Gehäuse 1 und zum Austrittsrohr 10 angeordnet, das gasdicht am Gehäuse 1 angeschlossen ist. Das Abgasrohr 8 ist an seinem zweiten Ende 13 entsprechend der bevorzugten Ausführungsform dadurch mit geringen Kontaktflächen für die Wärmeleitung mit dem Gehäuse 1 bzw. dem Austrittsrohr 10 verbunden, dass ein flaches Element 15 mit U-förmiger Ausnehmung in Ausnehmungen 16 am zweiten Ende 13 des Abgasrohrs 8 eingreifen und mit Abstand dazu auf einem Vorsprung 17 aufliegt, der über die Innenwand des Austrittsrohrs 10 ragt und z.B. ringförmig ist. Ein solcher Vorsprung 17 wird bevorzugt von einem Ring 23 gebildet, der gasdicht an einer Flanschverbindung 18 des Austrittsrohrs 10 angeordnet ist. Es hat sich beim Verfahren mit der erfindungsgemäßen Vorrichtung gezeigt, dass eine solche Anordnung des Abgasrohrs 8 zum Austrittsrohr 10, das an das Gehäuse 1 angeschlossen ist, eine geringe Wärmeleitung zum Austrittsrohr 10 ergibt, so dass das Austrittsrohr 10 optional ohne Kühlmantel sein kann. Die Halterung des Abgasrohrs 8 durch ein flaches Element 15, das auf einem Vorsprung 17 aufliegt, der an einer Flanschverbindung 18 des Austrittsrohrs 10 angeordnet ist, erlaubt einen einfachen Aufbau und eine einfache Montage des Abgasrohrs 8 und der an dessen erstem Ende gehaltenen Haube 7 innerhalb des Gehäuses 1 bzw. innerhalb des Austrittsrohrs 10.

Das Gehäuse 1 weist einen Einlass 19 für Kühlgas auf, der auf den Raum zwischen Tiegelöffnung, 5 und Kathode 6 gerichtet ist, die mit Abstand zum Tiegel, insbesondere oberhalb der Tiegelöffnung, 5 angeordnet ist. Gezeigt ist ein Einlass 19 für Kühlgas, der als Anschluß am Gehäuse 1 angebracht ist, durch das auch die Kathode 6 geführt ist, sowie als Alternative ein Einlass 19, an dem eine Zuleitung 21 für Kühlgas entsprechend der bevorzugten Ausführungsform entlang der Kathode 6 verläuft.

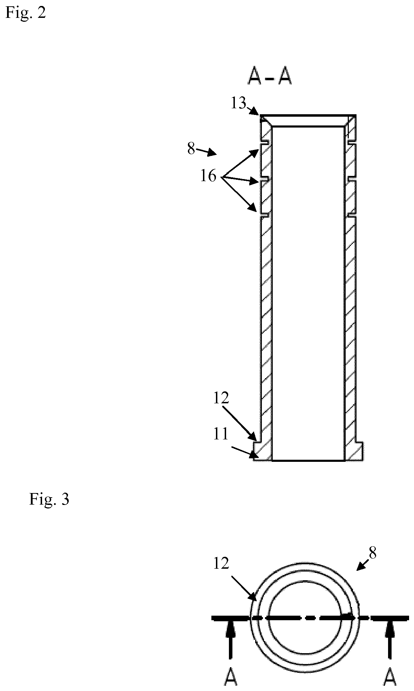

Figur 2 zeigt im Detail ein bevorzugtes Abgasrohr 8 im Schnitt A-A von Figur 3, das an seinem zweiten Ende 13 Ausnehmungen 16, die vorzugsweise umlaufend sind, zum Eingriff eines flachen Elements 15 aufweist. Am ersten Ende 11 des Abgasrohrs 8 ist ein umlaufender Vorsprung 12 angeformt, auf dem die kleine Öffnung einer Haube 7 aufliegen kann.

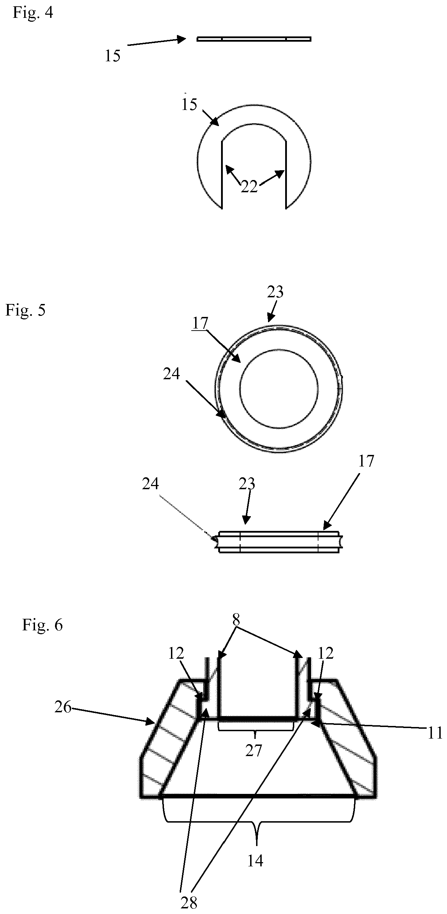

Figur 4 zeigt ein bevorzugtes flaches Element 15, dessen parallele Kanten 22 seiner Ausnehmung in gegenüberliegende Abschnitte der Ausnehmungen 16 des Abgasrohrs 8 eingeschoben sind. Das flache Element 15 kann z.B. eine Dicke von 1 bis 3 mm aufweisen.

Figur 5 zeigt in Aufsicht einen Ring 23, der einen Vorsprung 17 als Auflage für den äußeren Randbereich des flachen Elements 15 bildet. Der Ring 23 weist bevorzugt eine umfängliche äußere Nut 24 auf, in die ein Dichtungsring eingelegt ist, so dass der Ring 23 bei Anordnung in eine Flanschverbindung 18 die Gasdichtheit der Flanschverbindung aufrecht erhält und innerhalb des vertikalen Austrittsrohrs 10 eine horizontale Auflage 25 für das flache Element 15 bildet. Die um 90° gedrehte Ansicht zeigt die Nut 24 zur Aufnahme eines Dichtungsrings.

Figur 6 zeigt eine Haube 7 im Schnitt entlang ihrer Mittelachse. Der endständige Haubenquerschnitt 14 wird von Wänden 26 aufgespannt, die bevorzugt kegelförmig auf eine gegenüberliegende kleinere Öffnung 27 zulaufen, an die ein umlaufender Rand 28 anschließt, der gegen den Vorsprung 12 am ersten Ende des Abgasrohrs 8 anliegt, um die Haube 8 vom ersten Ende des Abgasrohrs 8 zu halten.

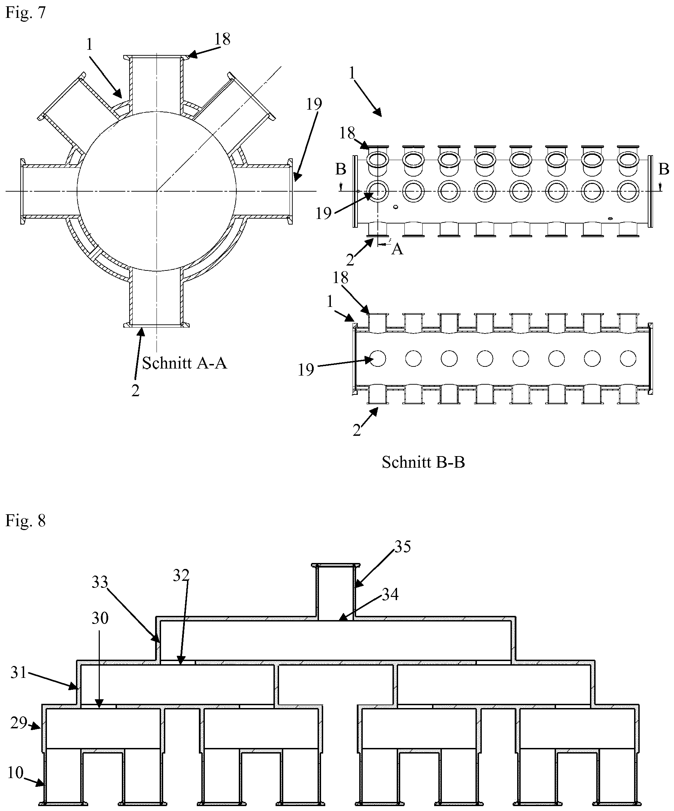

Figur 7 zeigt ein Gehäuse 1, das das gemeinsame Gehäuse 1 für eine Anordnung von acht Lichtbogenreaktoren bildet. Die Trägergaszuführungen 2, die Einlässe 19 für Kühlgas und die Flanschverbindungen 18 für Austrittsrohre 10 für jeden der in dem gemeinsamen Gehäuse 1 angeordneten Lichtbogenreaktoren sind jeweils parallel angeordnet.

Figur 8 zeigt eine bevorzugte Anordnung von Austrittsrohren 10, die bevorzugt vertikal angeordnet sind und jeweils eine Flanschverbindung 18 mit dem gemeinsamen Gehäuse 1 der Anordnung von Reaktoren gemäß Figur 7 bilden. Jeweils zwei Austrittsrohre 10 sind an einem horizontal angeordneten primären Verbindungsrohr 29 angeschlossen. Der Auslass 30 des primären Verbindungsrohrs 29 ist gegenüber den Anschlüssen der Austrittsrohre 10 und im jeweils gleichen Abstand zu diesen angeordnet. Jeweils zwei Auslässe 30 primärer Verbindungsrohre 29 sind an einem den Austrittsrohren 10 gegenüberliegend angeschlossenen sekundären Verbindungsrohr 31 angeschlossen, wobei dessen Auslass 32 im jeweils gleichen Abstand zu den Anschlüssen der Auslässe 30 der primären Verbindungsrohre 29 angeordnet sind. Jeweils zwei Auslässe 32 sekundärer Verbindungsrohre 31 ist an ein tertiäres Verbindungsrohr 33 angeschlossen, dessen gegenüberliegender Auslass 34 gegenüber den Anschlüssen der Auslässe 32 sekundärer Verbindungsrohre 31 und in jeweils gleichem Abstand zu diesen angeordnet ist. An den Auslass 34 ist in der Anordnung bevorzugt ein gemeinsames Austrittsrohr 35 angeschlossen.

Der symmetrische Anschluss von jeweils zwei Austrittsrohren 10 an ein primäres Verbindungsrohr und der symmetrische Anschluss der Auslässe von jeweils zwei Auslässen an ein nachgeordnetes Verbindungsrohr bis zum Anschluss an ein gemeinsames Austrittsrohr 35 erlaubt den gleichen Strömungswiderstand in jedem Austrittsrohr 10.

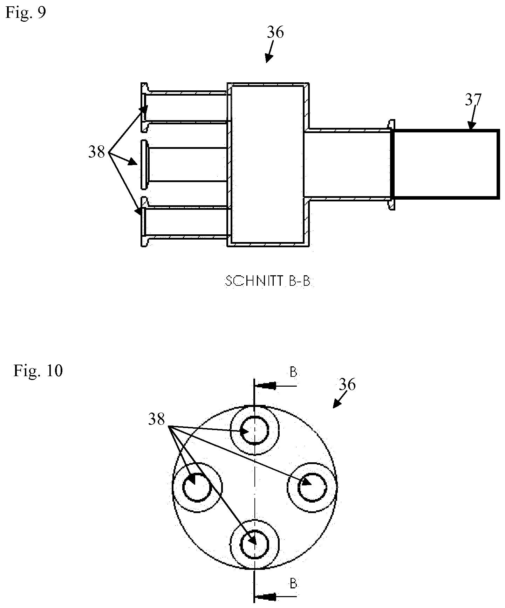

Die Aufsicht von Figur 10 und die in Figur 9 gezeigte Schnittansicht entlang B-B zeigen einen Gasverteiler 36 für Trägergas, der jede Zuleitung für Trägergas einer Anordnung von vier Reaktoren einer Anordnung von Reaktoren in einem gemeinsamen Gehäuse mit einer gemeinsamen Trägergasleitung verbindet, so dass jede Zuleitung denselben Strömungswiderstand aufweist. Der Gasverteiler 36 weist an seinem Gehäuse Anschlüsse 38 für Trägergaszuführungen auf, wobei die Anschlüsse 38 am Gasverteiler 36 symmetrisch zu einem Anschluss für eine gemeinsame Trägergasleitung 37 angeordnet sind.

Die Zuleitungen für Kühlgas können mittels eines entsprechenden Gasverteilers mit der gemeinsamen Trägergasleitung verbunden sein.

Insbesondere in Verbindung mit dem Anschluss der Austrittsrohre 10 mit jeweils gleichem Strömungswiderstand an ein gemeinsames Austrittsrohr 35 erlaubt die Vorrichtung ein effektives Verfahren zur Produktion von Nanopartikeln, da Verluste innerhalb des gemeinsamen Gehäuses 1 durch Abscheidungen von Nanopartikeln gering sind, die z.B. durch nicht in die Haube 7 gerichtete Trägergasströmungen innerhalb des Gehäuses 1 verursacht werden können.

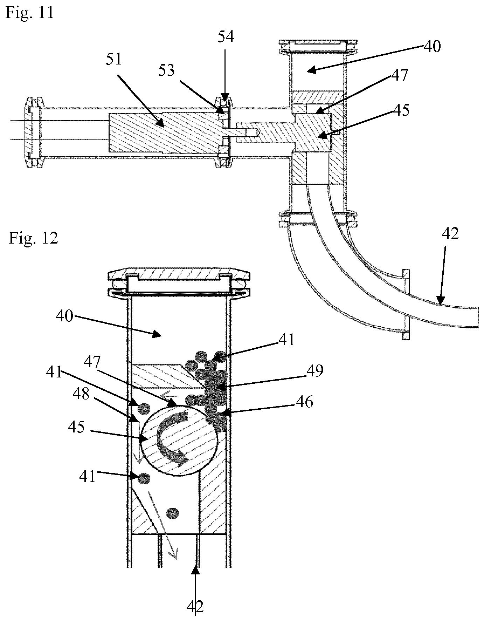

Figur 11 zeigt einen gasdicht mit dem Gehäuse 1 des Reaktors gasdicht verbindbaren Vorratsbehälter 40 für Rohstoff, der mit dem Gehäuse 1 einen gemeinsamen Gasraum umschließt. Der Rohstoff kann mittels einer Zuführleitung 42 für Rohstoff, die in das zweite Ende des Abgasrohrs 8 mündet, in die Tiegelöffnung, 5 geführt werden. Bevorzugt ist zwischen dem Vorratsbehälter 40 und der Zuführleitung 42 gasdicht eine Fördereinrichtung 43 für Rohstoff angeschlossen, die insbesondere zur Förderung von Rohstoffgranalien 41 geeignet ist. Die Fördereinrichtung 43, die in Figur 12 im Schnitt in 90° gedreht zu Figur 11 gezeigt ist, weist unterhalb des Vorratsbehälters 40 einen um eine etwa horizontale Achse drehbaren Rotor 45 auf, der in einem Gehäuseabschnitt angeordnet ist, der auf einer ersten Seite 46 vom oberen Scheitel 47 des Rotors im geringeren Abstand vom Rotor 45 angeordnet ist, als der Durchmesser des Rohstoffs beträgt, z.B. der Granalien 41. Der Gehäuseabschnitt ist auf der der ersten Seite 46 gegenüberliegenden zweiten Seite 48 in größerem Abstand vom Rotor 45 angeordnet, als der Durchmesser des Rohstoffs beträgt, um einen freien Durchgang für den Rohstoff zu bilden, wie durch die Pfeile zwischen den beispielhaften Rohstoffgranalien 41 angezeigt ist. Die Drehrichtung des Rotors 45 von der ersten Seite über seinen Scheitel 47 zur zweiten Seite 48 ist in Figur 12 durch den Pfeil im Rotor 45 angedeutet. Zur Zuführung des Rohstoffs auf die erste Seite 46 ist zwischen dem Vorratsbehälter 40 und dem Rotor 45 ein Durchlass 49 angeordnet, der z.B. durch eine Ausnehmung in einer auf dem Gehäuseabschnitt drehbaren Scheibe 50 gebildet ist.

Figur 11 zeigt auch, dass der Antriebsmotor 51 des Rotors 45 gasdicht innerhalb eines Gehäuses eingeschlossen sein kann, das gasdicht mit dem Gehäuseabschnitt verbunden ist, in dem der Rotor angeordnet ist, wobei nur die elektrischen Leitungen 52 für den Antriebsmotor 51 durch das Gehäuse geführt sind, jedoch keine bewegten Elemente. Dabei ist eine Halteplatte 53, die den Antriebsmotor 51 in dem Gehäuse hält, mit Durchbrechungen versehen, durch die der Gehäuseteil evakuiert bzw. mit einer Trägergasatmosphäre versehen werden kann, in dem der Antriebsmotor 51 angeordnet ist. Bevorzugt ist die Halteplatte in einer Flanschverbindung 54 zwischen zwei Gehäuseteilen gasdicht eingeklemmt.

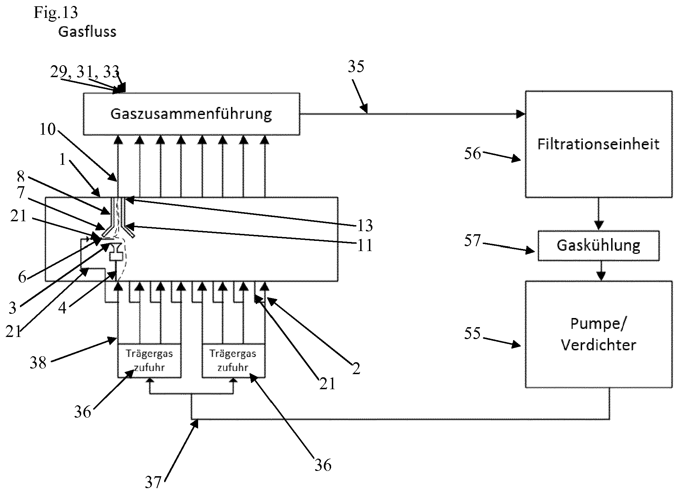

Figur 13 zeigt eine Übersicht über eine Anordnung von 8 Reaktoren in einem gemeinsamen Gehäuse 1, in dem acht Tiegel 3, jeweils an einer Anode 4 angebracht und mit einer beabstandeten Kathode 6 angeordnet sind, mit jeweils einer Trägergaszuführung 2 unterhalb der Tiegel 3, je Tiegel 3 zumindest einem auf den Raum zwischen Tiegel 3 und Kathode 6 gerichteten Einlass für Kühlgas 19 mit je einer Kühlgaszuleitung 21. In dem gemeinsamen Gehäuse 1 ist stellvertretend nur für einen Reaktor der Tiegel 3 auf der Anode 4 mit Kathode 6, Einlass für Kühlgas 19 an der Kühlgasleitung 21 unterhalb der Haube 7 am Abgasrohr 8 gezeigt. Die Trägergaszuführungen 2 sind mittels eines Gasverteilers 36 mit einer gemeinsamen Trägergasleitung 37 verbunden, und die Kühlgaszuleitungen 21 sind mittels eines Gasverteilers 36 mit der gemeinsamen Trägergasleitung 37 verbunden. Die Trägergaszuführungen sind jeweils mit demselben Strömungswiderstand mit der gemeinsamen Trägergasleitung 37 verbunden. Die Kühlgaszuleitungen 21 sind jeweils mit demselben Strömungswiderstand mit der gemeinsamen Trägergasleitung 37 verbunden.

Die oberhalb jedes Tiegels 3 in einem Abstand angeordneten Hauben 7 werden von jeweils einem Abgasrohr 8 an dessen ersten Ende 11 gehalten, das an seinem gegenüberliegenden zweiten Ende 13 an einem Austrittsrohr 10 angebracht ist. Die Austrittsrohre 10 sind mittels Verbindungsrohren 29, 31, 33 mit einem gemeinsamen Austrittsrohr 35 verbunden, so dass jedes Austrittsrohr 10 denselben Strömungswiderstand zum gemeinsamen Austrittsrohr 35 aufweist. Das gemeinsame Austrittsrohr 35 und die gemeinsame Trägergasleitung 37 sind miteinander verbunden, wobei zwischen diesen ein Verdichter 55 zur Gasförderung, eine Trenneinrichtung 56 zur Abtrennung der Nanopartikel aus dem Abgas und eine Kühleinrichtung 57 zur Kühlung des Gasstroms angeschlossen sind.

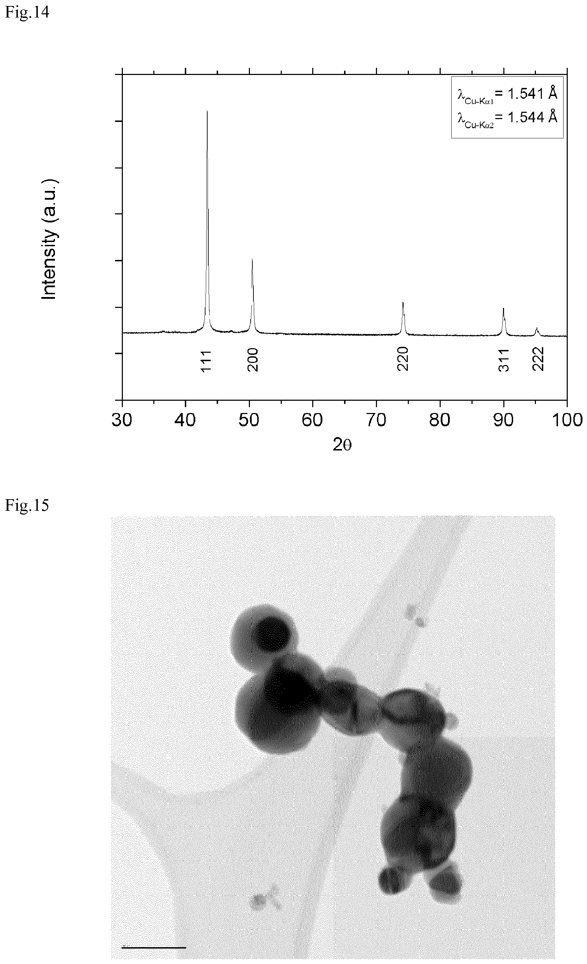

Figur 14 zeigt das Ergebnis einer Röntgendiffraktometrie-Analyse (XRD) an den mit einer Vorrichtung nach Figur 1 erzeugten Nanopartikeln aus reinem Kupfer. Die Reflexionspeaks der Messung sind eindeutig der Gitterstruktur von Kupfer zuzuweisen und zeigen keine Anhaltspunkte für Kupferoxid.

Figur 15 zeigt eine rasterelektronenmikroskopische (REM) Aufnahme der hergestellten Kupfernanopartikel, der Balken hat eine Länge von 100 nm. Die durchschnittliche Größe der Kupferpartikel von 80 nm wurde sowohl mittels unterschiedlichen Messtechniken, wie auch durch das Auszählen von REM-Aufnahmen festgestellt.

**Bezugszeichenliste:**

| | |
|---|---|
| 1 Gehäuse des Reaktors | 30 Auslass des primären Verbindungsrohrs |
| 2 Trägergaszuführung | 31 sekundäres Verbindungsrohr |
| 3 Tiegel | 32 Auslass des sekundären |
| 4 Anode | Verbindungsrohrs |
| 5 Tiegelöffnung | 33 tertiäres Verbindungsrohr |
| 6 Kathode | 34 Auslass des tertiären Verbindungsrohrs |
| 7 Haube | 35 gemeinsames Austrittsrohr |
| 8 Abgasrohr | 36 Gasverteiler |
| 9 Trägergasaustritt | 37 gemeinsame Trägergasleitung |
| 10 Austrittsrohr | 38 Anschluss für Trägergaszuführung |
| 11 erstes Ende des Abgasrohrs | 40 Vorratsbehälter |
| 12 Vorsprung | 41 Rohstoffgranalie |
| 13 zweites Ende des Abgasrohrs | 42 Zuleitung für Rohstoff |
| 14 endständiger Haubenquerschnitt | 43 Fördereinrichtung |
| 15 flaches Element | 45 Rotor |
| 16 Ausnehmung | 46 erste Seite |
| 17 Vorsprung | 47 Scheitel |
| 18 Flanschverbindung | 48 zweite Seite |
| 19 Einlass für Kühlgas | 49 Durchlass |
| 21 Zuleitung für Kühlgas | 50 Scheibe |
| 22 Kanten des flachen Elements | 51 Antriebsmotor |
| 23 Ring | 52 elektrische Leitung |
| 24 umlaufende Nut | 53 Halteplatte |
| 25 Auflage | 54 Flanschverbindung |
| 26 Wände der Haube | 55 Verdichter |
| 27 kleinere Öffnung der Haube | 56 Trenneinrichtung |
| 28 Rand | 57 Kühleinrichtung |
| 29 primäres Verbindungsrohr | |

## Patentansprüche

1. Anordnung von zumindest zwei Lichtbogenreaktoren zur Herstellung von Nanopartikeln aus einer Rohstoffschmelze, die ein gemeinsames Reaktorgehäuse (1) aufweisen, das in aneinander angrenzenden Abschnitten die Elemente eines Lichtbogenreaktors enthält, so dass jeweils ein Reaktorgehäuse einen Abschnitt des gemeinsamen Reaktorgehäuses (1) der Anordnung bildet, wobei in jedem Lichtbogenreaktor ein mit einer Anode (4) verbundener Tiegel (3) und eine vom Tiegel (3) beabstandete Kathode (6) angeordnet sind, mit einer unterhalb des Tiegels (3) in das Gehäuse (1) eintretenden Trägergaszuführung (2) und einem oberhalb des Tiegels (3) austretenden Trägergasaustritt (9), **dadurch gekennzeichnet, dass** in einem Abstand oberhalb des Tiegels (3) eine vom Tiegel (3) getrennte Haube (7) angeordnet ist, deren endständiger Querschnitt zumindest die Öffnung (5) des Tiegels (3) überspannt, dass die Haube (7) mittels eines Abgasrohrs (8) mit dem Trägergasaustritt (9) verbunden ist und dass das Gehäuse (1) zumindest einen auf den Zwischenraum zwischen Tiegel (3) und Haube (7) gerichteten Einlass für Kühlgas (19) aufweist und dass jeweils zwei Trägergasaustritte durch jeweils ein vertikales Austrittsrohr (10) mit einem oberhalb der Austrittsrohre (10) angeordneten gemeinsamen horizontalen primären Verbindungsrohr (29) verbunden sind, das ein im gleichen Abstand zwischen den Austrittsrohren (10) angeordnetes und oberhalb des primären Verbindungsrohrs (29) angeschlossenes horizontales sekundäres Austrittsrohr (10) aufweist, wobei zumindest zwei der Trägergaszuführungen (2), von denen jeweils eine unterhalb eines Tiegels (3) in das Gehäuse (1) eintritt, mit einer gemeinsamen Trägergasleitung (37) verbunden sind, von der Zuleitungen zu jeder Trägergaszuführung (2) abgehen, wobei die Zuleitungen jeweils denselben Strömungswiderstand und denselben Innenquerschnitt aufweisen und keinen Durchflussmengenregler aufweisen und die Austrittsrohre (10) mit einem gemeinsamen Austrittsrohr (35) verbunden sind, das mit einer Trenneinrichtung (56) zur Abtrennung von Nanopartikeln von Gas verbunden ist und die Trenneinrichtung (56) einen Gasauslass aufweist, der mit einer Kühleinrichtung (57) für Gas verbunden ist, deren Gasauslass mit der gemeinsamen Trägergasleitung verbunden ist.

2. Anordnung nach Anspruch 1, **dadurch gekennzeichnet, dass** das Gehäuse gasdicht ist und ein Vorratsbehälter (40) für Rohstoffgranalien (41), eine Zuführleitung für Rohstoffgranalien (41) und zwischen dem Vorratsbehälter (40) und der Zuführleitung (42) eine gesteuerte Fördereinrichtung (43) für Rohstoffgranalien (41) einschließlich ihres Antriebsmotors (51) gasdicht mit dem Gehäuse (1) verbunden sind.

3. Anordnung nach Anspruch 2, wobei die Fördereinrichtung (43) für Rohstoffgranalien (41), die unterhalb eines Durchlasses (49), der mit einem Vorratsbehälter (40) für Rohstoffgranalien (41) verbunden ist, einen Rotor (45) mit einer umlaufenden Umfangsfläche aufweist, der von einem gesteuerten Motor um eine etwa horizontale Drehachse angetrieben ist, wobei der Durchlass (49) oberhalb des Rotors (45) neben dessen oberem Scheitel (47) angeordnet ist und der Rotor (45) innerhalb eines ersten Gehäuseabschnitts angeordnet ist, der in einem geringeren Abstand von der Umgangsfläche angeordnet ist und in Bezug auf den oberen Scheitel (47) auf der gegenüberliegenden zweiten Seite des Rotors (45) der Gehäuseabschnitt in einem größeren Abstand von der Umfangsfläche des Rotors (45) angeordnet.

4. Anordnung nach einem der voranstehenden Ansprüche, **dadurch gekennzeichnet, dass** zumindest ein Einlass für Kühlgas (19) mit einer entlang der Kathode (6) angeordneten Zuleitung für Kühlgas (21) verbunden ist.

5. Anordnung nach einem der voranstehenden Ansprüche, **dadurch gekennzeichnet, dass** zumindest zwei der Einlässe für Kühlgas (19), von denen jeweils einer auf einen Tiegel (3) gerichtet ist, mit einer gemeinsamen Kühlgasleitung verbunden sind, von der Zuleitungen (21) zu jedem der Einlässe für Kühlgas (19) abgehen, wobei die Zuleitungen (21) jeweils denselben Strömungswiderstand aufweisen und keinen Durchflussmengenregler aufweisen.

6. Anordnung nach einem der voranstehenden Ansprüche, **dadurch gekennzeichnet, dass** sie für jede Anode (4), die mit einem Tiegel (3) verbunden ist und jede Kathode (6), die an demselben Tiegel (3) angeordnet ist, eine separate Stromquelle aufweist.

7. Verfahren zur Herstellung von nicht oxidierten Nanopartikeln durch Erzeugen eines Lichtbogens in zumindest zwei Lichtbogenreaktoren, jeweils mit einem mit einer Anode (4) verbundenen Tiegel (3) und einer vom Tiegel (3) beabstandeten Kathode (6), die in aneinander angrenzenden Abschnitten innerhalb eines gemeinsamen gasdichten Gehäuses (1) angeordnet sind, wobei unterhalb des Tiegels (3) Trägergas in das Gehäuse (1) zugeführt wird und oberhalb des Tiegels (3) Trägergas aus dem Gehäuse (1) austritt und dem Tiegel (3) Rohstoffgranalien (41) zugeführt werden, **dadurch gekennzeichnet, dass** das Trägergas mittels einer vom Tiegel (3) getrennten Haube (7), die oberhalb des Tiegels (3) angeordnet ist und deren endständiger Querschnitt zumindest die Öffnung (5) des Tiegels (3) überspannt und die mittels eines Abgasrohrs (8) mit einem Trägergasaustritt (9) verbunden ist, aus dem Gehäuse (1) tritt und dass in das Gehäuse (1) Kühlgas geführt wird, das aus zumindest einer Richtung auf den Zwischenraum zwischen Tiegel (3) und Haube (7) gerichtet ist, dass das Trägergas für zumindest zwei separate Tiegel (3) jeweils durch Zuleitungen (21) für Trägergas geführt wird, die mit einer gemeinsamen Trägergasleitung (37) verbunden sind, wobei die Zuleitungen (21) jeweils denselben Strömungswiderstand aufweisen und keinen Durchflussmengenregler und dass das Kühlgas für zumindest zwei separate Tiegel (3) jeweils durch Zuleitungen (21) geführt wird, die mit einer gemeinsamen Kühlgasleitung verbunden sind, von der Zuleitungen (21) zu jedem der Einlässe (19) für Kühlgas abgehen, wobei die Zuleitungen (21) jeweils denselben Strömungswiderstand aufweisen und jedem Einlass (19) denselben Volumenstrom Kühlgas zuleiten.

8. Verfahren nach Anspruch 7, **dadurch gekennzeichnet, dass** dem Tiegel (3) aus einem Vorratsbehälter (40) Rohstoffgranalien (41) durch eine Fördereinrichtung (43) zugeführt werden, die einen um eine etwa horizontal angeordnete Drehachse angetriebenen Rotor (45) aufweist, auf dessen erste Seite (46) neben seinem oberen Scheitel (47) die Rohstoffgranalien (41) zugeführt werden und durch Drehung des Rotors (45) über seinen oberen Scheitel (47) auf die zweite Seite (48) mitgenommen werden und in ein Leitrohr fallen, das gegenüber der Haube (7) in das Abgasrohr (8) oder mit einem Abstand in den Tiegel (3) mündet.

9. Verfahren einem der Ansprüche 7 bis 8, **dadurch gekennzeichnet, dass** Kühlgas entlang der Kathode (6) geführt wird.

10. Verfahren einem der Ansprüche 7 bis 9, **dadurch gekennzeichnet, dass** das aus dem Gehäuse (1) austretende Abgas für jeweils zwei Tiegel (3) durch jeweils ein vertikales Abgasrohr (8) zu einem etwa horizontalen gemeinsamen primären Verbindungsrohr (29) geführt wird und durch das primäre Verbindungsrohr (29) und ein senkrechtes, im gleichen Abstand zwischen den senkrechten Abgasrohren (8) oberhalb des primären Verbindungsrohrs (29) angeschlossenes vertikales sekundäres Verbindungsrohr (31) geführt wird.

11. Verfahren einem der Ansprüche 7 bis 10, **dadurch gekennzeichnet, dass** das Trägergas und das Kühlgas gleich sind und aus dem Gehäuse (1) austretendes Trägergas nach Abtrennung von Nanopartikeln gekühlt und als Trägergas und Kühlgas rückgeführt wird.

12. Verfahren einem der Ansprüche 7 bis 11, **dadurch gekennzeichnet, dass** die Nanopartikel für Cu⁰ als Rohstoff mit einer mittleren Größe von 80 nm mit einem spezifischen Energieverbrauch von ca. 100 kWh/kg für den Lichtbogen erzeugt werden, für Ag⁰ als Rohstoff mit einer mittleren Größe von 100 nm mit einem spezifischen Energieverbrauch von 900 kWh/kg für den Lichtbogen erzeugt werden oder für Zn⁰ als Rohstoff mit einer mittleren Größe von 150 nm mit einem spezifischen Energieverbrauch von 20 kWh/kg für den Lichtbogen erzeugt werden.

## Claims

1. Arrangement of at least two arc reactors for producing nanoparticles from a raw material melt having a common reactor housing (1), which in adjacent sections contains the elements of an arc reactor so that respectively one reactor housing forms a section of the common reactor housing (1) of the arrangement, wherein in each arc reactor a crucible (3) connected to an anode (4) and a cathode (6) spaced from the crucible (3) are disposed, having a carrier gas feed (2) entering into the housing (1) below the crucible (3), and a carrier gas outlet (9) exiting above the crucible (3), **characterized in that** at a distance above the crucible (3) and separated from the crucible (3) there is disposed a hood (7), the terminal cross-section of which hood spans at least over the opening (5) of the crucible (3), so that the hood (7) is connected to the carrier gas outlet (9) by means of an exhaust pipe (8) and **in that** the housing (1) has at least one inlet for cooling gas (19) directed towards the interstice between the crucible (3) and the hood (7) and **in that** each two carrier gas outlets are connected by a vertical outlet pipe (10) each to a common horizontal primary connecting pipe (29) disposed above the outlet pipes (10), the primary connecting pipe (29) having a secondary horizontal outlet pipe (10) connected at the same distance between the outlet pipes (10) and disposed above the primary connecting pipe (29), wherein at least two of the carrier gas feeds (2), from which one each enters into the housing (1) below a crucible (3), are connected to a common carrier gas line (37), from which feed lines branch off to each carrier gas feed (2), wherein the feed lines each have the same flow resistance and the same internal cross-section and no flow controller, and the outlet pipes (10) are connected to a common outlet pipe (35), which is connected to a separating device (56) for the separation of nanoparticles from gas, and the separating device (56) has a gas outlet that is connected to a cooling device (57) for gas, the gas outlet of which is connected to the common carrier gas line.

2. Arrangement according to claim 1, **characterized in that** the housing is gas-tight and a reservoir (40) for raw material granules (41), a supply conduit for raw material granules (41) and between the reservoir (40) and the feed line (42) a controlled conveying device (43) for raw material granules (41) including its drive motor (51) are connected to the housing (1) in a gas-tight manner.

3. Arrangement according to claim 2, wherein the conveying device (43) for raw material granules (41), which below a passage (49) connected to a reservoir (40) for raw material granules (41) has a rotor (45) having a rotary circumferential surface that is driven by a controlled motor about an approximately horizontal axis of rotation, wherein the passage (49) is disposed above the rotor (45) adjacent to its upper apex (47) and the rotor (45) is disposed within a first housing section, which is disposed at a smaller distance from the circumferential surface and in relation to the upper apex (47) the housing section on the opposite second side of the rotor (45) is disposed at a greater distance from the circumferential surface of the rotor (45).

4. Arrangement according to one of the preceding claims, **characterized in that** at least one inlet for cooling gas (19) is connected with a feed line for cooling gas (21) disposed along the cathode (6).

5. Arrangement according to one of the preceding claims, **characterized in that** at least two of the inlets for cooling gas (19), of which one each is directed towards a crucible (3), are connected with a common cooling gas line, from which the feed lines (21) branch off to each of the inlets for cooling gas (19), wherein the feed lines (21) each have the same flow resistance and have no flow controller.

6. Arrangement according to one of the preceding claims, **characterized in that** for each anode (4) connected with a crucible (3) and each cathode (6) disposed on the same crucible (3) there is a separate power source.

7. Process for the production of non-oxidized nanoparticles by generating an arc in at least two crucibles (3), each having a crucible (3) connected to an anode (4) and a cathode (6) spaced from the crucible (3), which are disposed in adjacent sections within a common gas-tight housing (1), wherein a carrier gas is fed into the housing (1) below the crucible (3), and carrier gas exits above the crucible (3) from the housing (1), and raw material granules (41) are fed into the crucible (3), **characterized in that** the carrier gas exits the housing (1) by means of a hood (7) that is separate from the crucible (3) and is disposed above the crucible (3) and its terminal cross-section spans at least the opening (5) of the crucible (3) and which is connected to a carrier gas outlet (9) by means of an exhaust pipe (8), and **in that** a cooling gas is fed into the housing (1), which cooling gas is directed from at least one direction towards the interstice between the crucible (3) and the hood (7), that for at least two separate crucibles (3) the carrier gas is respectively guided through feed lines (21) for carrier gas that are connected to a common carrier gas line (37), wherein the feed lines (21) each have the same flow resistance and no flow controller, and that the cooling gas for at least two separate crucibles (3) is each guided by feed lines (21), which are connected with a common cooling gas line, from which feed lines (21) branch off to each of the inlets (19) for cooling gas, wherein the feed lines (21) each have the same flow resistance and to each inlet (19) feed the same volumetric flow rate of cooling gas.

8. Process according to claim 7, **characterized in that** raw material granules (41) are fed from a reservoir (40) to the crucible (3) by a conveying device (43), which has a rotor (45) driven about an approximately horizontally disposed axis of rotation, on the first side (46) of which adjacent to its upper apex (47) the raw material granules (41) are fed and are carried along over its upper apex (47) to the second side (48) by rotation of rotor (45) and fall into a guidance pipe which opposite the hood (7) opens into the exhaust pipe (8) or at a distance into the crucible (3).

9. Process according to one of claims 7 and 8, **characterized in that** cooling gas is guided along the cathode (6).

10. Process according to one of claims 7 to 9, **characterized in that** the exhaust gas exiting the housing (1) for each two crucibles (3) is guided by a vertical exhaust pipe (8) each to an approximately horizontal common primary connecting pipe (29) and by the primary pipe connecting pipe (29) and a vertical secondary connecting pipe (31) that is connected above the primary connecting pipe (29) at equal distances between the vertical exhaust pipes (8).

11. Process according to one of claims 7 to 10, **characterized in that** the carrier gas and cooling gas are the same gas, and the carrier gas exiting from housing (1) after the separating off of nanoparticles is cooled and then recycled as carrier gas and cooling gas.

12. Process according to one of claims 7 to 11, **characterized in that** the nanoparticles for Cu⁰ as a raw material are produced at a mean size of 80 nm at a specific energy consumption of approx. 100 kWh/kg for the arc, for Ag⁰ as a raw material at a mean size of 100 nm at a specific energy consumption of 900 kWh/kg for the arc, or for Zn⁰ as a raw material at a mean size of 150 nm at a specific energy consumption of 20 kWh/kg for the arc.

## Revendications

1. Agencement d'au moins deux réacteurs à arc pour la production de nanoparticules à partir d'une matière première fondue, qui présentent un boîtier de réacteur commun (1), qui contient les éléments d'un réacteur à arc dans des sections adjacentes, de sorte que dans chaque cas un boîtier de réacteur forme une partie du boîtier de réacteur commun (1) de l'agencement, chaque réacteur à arc présentant un creuset (3) relié à une anode (4) et une cathode (6) espacée du creuset (3), avec une arrivée de gaz porteur (2) entrant dans le boîtier (1) en dessous du creuset (3) et une sortie de gaz porteur (9) débouchant au-dessus du creuset (3), **caractérisé en ce qu'**une hotte séparée (7) du creuset (3) est disposée à une certaine distance au-dessus du creuset (3), hotte dont la section terminale enjambe au moins l'ouverture (5) du creuset (3), de sorte que la hotte (7) est reliée à la sortie de gaz porteur (9) au moyen d'un tuyau d'échappement (8) et **en ce que** le boîtier (1) comporte au moins une entrée pour le gaz de refroidissement (19) dirigée vers l'espace intermédiaire entre le creuset (3) et la hotte (7) et que dans chaque cas, deux sorties de gaz porteur sont reliées par un tuyau de sortie vertical respectif (10) avec un tuyau de raccordement primaire horizontal commun (29) agencé au-dessus des tuyaux de sortie (10), présentant un tuyau de sortie secondaire horizontal (10) disposé ayant une même distance entre les tuyaux de sortie (10) et raccordé au-dessus du tuyau de raccordement primaire (29), dans lequel au moins deux des arrivées en gaz porteur (2), dont chacune pénètre dans le boîtier (1) en dessous d'un creuset (3), sont connectées à une conduite de gaz porteur commune (37), reliant les conduites d'alimentation à chacune des arrivées de gaz porteur (2), dans lequel les conduites d'alimentation ont chacune la même résistance à l'écoulement et la même section transversale intérieure sans régulateur de débit, et les tuyaux de sortie (10) sont connectés à un tuyau de sortie commun (35), lui-même relié à un séparateur (56) permettant de séparer les nanoparticules du gaz et le séparateur (56) présente une sortie de gaz reliée à un dispositif de refroidissement (57) pour le gaz, dont la sortie de gaz est connectée à la conduite de gaz porteur commune.

2. Agencement selon la revendication 1, **caractérisé en ce que** le boîtier est étanche aux gaz tandis que : un réservoir (40) de granulés de matière première (41), une conduite d'alimentation pour granulés de matière première (41), et un convoyeur motorisé (43) pour granulés de matière première (41), disposé entre le réservoir (40) et la conduite d'alimentation (42), avec son moteur d'entraînement (51), sont connectés au boîtier (1) de manière étanche au gaz.

3. Agencement selon la revendication 2, dans lequel le convoyeur (43) pour granulés de matière première (43), sous un passage (49) relié à un réservoir (40) pour granulés de matière première (40), présente un rotor (45) avec une surface périphérique sur tout le pourtour, surface entraînée autour d'un axe de rotation sensiblement horizontal par un moteur commandé, dans lequel le passage (49) est disposé au-dessus du rotor (45) adjacent à son sommet supérieur (47) et le rotor (45) est disposé dans une première partie de boîtier, disposé à une distance plus petite de la surface périphérique et à une plus grande distance de la surface périphérique du rotor (45) par rapport au sommet supérieur (47) sur le second côté opposé du rotor (45) de la partie du boîtier.

4. Agencement selon l'une des revendications précédentes, **caractérisé en ce qu'**au moins une entrée pour le gaz de refroidissement (19) est connectée à une conduite d'arrivée de gaz de refroidissement (21) disposée le long de la cathode (6).

5. Agencement selon l'une des revendications précédentes, **caractérisé en ce qu'**au moins deux des entrées pour le gaz de refroidissement (19), dont chacune est dirigée vers un creuset (3), sont reliées à une conduite de gaz de refroidissement commune, reliant les conduites d'arrivée (21) à chacune des entrées de gaz de refroidissement, dans lequel les conduites d'arrivée (21) ont chacune la même résistance à l'écoulement et n'ont pas de régulateur de débit.

6. Agencement selon l'une des revendications précédentes, **caractérisé en ce qu'**il comprend une source d'alimentation séparée pour chaque anode (4) reliée à un creuset (3) et chaque cathode (6) disposée sur le même creuset (3).

7. Procédé de production de nanoparticules non oxydées en générant un arc dans au moins deux réacteurs à arc, dans chaque cas avec un creuset (3) relié à une anode (4) et une cathode (6) espacée du creuset (3), agencées dans des sections adjacentes à l'intérieur d'un boîtier commun étanche aux gaz (1), dans lequel le gaz porteur est injecté dans le boîtier au-dessous du creuset (3) et le gaz porteur (1) sort du boîtier (1) au-dessus du creuset (3), tandis que des granulés de matière première sont acheminés au creuset (3), **caractérisé en ce que** le gaz porteur sort du boîtier (1), par le biais d'une hotte (7) séparée du creuset (3), hotte disposée au-dessus du creuset (3), dont la section terminale enjambe au moins l'ouverture (5) du creuset (3) et est reliée à une sortie de gaz porteur (9) au moyen d'un tuyau d'échappement (8), et que le gaz de refroidissement est injecté dans le boîtier (1), en partant au moins d'une direction vers l'espace entre le creuset (3) et la hotte (7), **en ce que** le gaz porteur est acheminé pour au moins deux creusets séparés (3) dans chaque cas par des conduites d'arrivée (21) pour gaz porteur, conduites connectées à une conduit de gaz porteur commune (37), dans lequel les conduites d'arrivée (21) ont chacune la même résistance à l'écoulement et n'ont pas de régulateur de débit et **en ce que** le gaz de refroidissement est acheminé pour au moins deux creusets séparés (3) dans chaque cas par des conduites d'arrivée (21), reliées par une conduite de gaz de refroidissement commune, reliant les conduites (21) à chacune des entrées (19) pour gaz de refroidissement, dans lequel les conduites d'arrivée (21) ont chacune la même résistance à l'écoulement et acheminent le même courant volumique de gaz de refroidissement à chaque entrée (19).

8. Procédé selon la revendication 7, **caractérisé en ce que** des granulés de matière première (41) sont acheminés au creuset (3) à partir d'un réservoir (40) par le biais d'un convoyeur de transport (43), présentant un rotor (45) entraîné autour d'un axe de rotation sensiblement horizontal, sur le premier côté duquel (46) les granulés de matière première (41) sont acheminés à côté de son sommet supérieur (47) et sont pris en charge sur le second côté (48) en passant par son sommet supérieur (47) sous l'effet de la rotation du rotor (45) avant de tomber dans un tuyau de guidage débouchant en face de la hotte (7) dans le gaz d'échappement ou bien à une certaine distance dans le creuset (3).

9. Procédé selon l'une des revendications 7 ou 8, **caractérisé en ce que** le gaz de refroidissement est guidé le long de la cathode (6).

10. Procédé selon l'une des revendications 7 à 9, **caractérisé en ce que** le gaz d'échappement sortant du boîtier (1) est guidé pour chacun des deux creusets (3) à travers un tuyau d'échappement vertical respectif (8) jusqu'à un tuyau de raccordement principal commun sensiblement horizontal (29), puis à travers le tuyau de raccordement primaire (29) et un tuyau de raccordement vertical (31) raccordé à la même distance entre les tuyaux d'échappement verticaux (8) au-dessus du tuyau de raccordement primaire (29).

11. Procédé selon l'une des revendications 7 à 10, **caractérisé en ce que** le gaz porteur et le gaz de refroidissement sont identiques et que le gaz porteur sortant du boîtier (1) est refroidi après séparation des nanoparticules et recyclé en gaz porteur et gaz de refroidissement.

12. Procédé selon l'une des revendications 7 à 11, **caractérisé en ce que** les nanoparticules pour Cu⁰ sont produites en tant que matières premières d'une taille moyenne de 80 nm avec une consommation d'énergie spécifique d'environ 100 kWh/kg pour l'arc, pour Ag⁰ en tant que matières premières d'une taille moyenne de 100 nm avec une consommation d'énergie spécifique d'environ 900 kWh/kg pour l'arc ou pour Zn⁰ en tant que matières premières d'une taille moyenne de 150 nm avec une consommation d'énergie spécifique d'environ 20 kWh/kg pour l'arc.
